(19) **Europäisches Patentamt**

**European Patent Office**

**Office européen des brevets**

(11) **EP 1 303 547 B1**

(12) **EUROPEAN PATENT SPECIFICATION**

(45) Date of publication and mention
of the grant of the patent:
**16.11.2005 Bulletin 2005/46**

(51) Int Cl.⁷: $C08F\ 10/06$, $C08F\ 110/06$, $C08F\ 210/06$ // $C08F2:02$

(21) Application number: **00988838.9**

(22) Date of filing: **27.12.2000**

(86) International application number:
**PCT/FI2000/001149**

(87) International publication number:
**WO 2001/048041 (05.07.2001 Gazette 2001/27)**

(54) **PROPYLENE POLYMERS WITH AN ULTRA HIGH MELT FLOW RATE**

PROPYLENPOLYMERE MIT EINER ULTRAHOHEN SCHMELZFLUSSRATE

POLYMERES DE PROPYLENE A VITESSE D'ECOULEMENT ELEVEE A L'ETAT FONDU

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.12.1999 FI 992791**

(43) Date of publication of application:
**23.04.2003 Bulletin 2003/17**

(73) Proprietor: **Borealis Technology Oy**
**06101 Porvoo (FI)**

(72) Inventors:
• **ALASTALO, Kauno**
**FIN-06400 Porvoo (FI)**
• **LESKINEN, Pauli**
**FIN-00640 Helsinki (FI)**
• **NOYNAERT, Nancy**
**B-3850 Nieuwerken (BE)**
• **VERPOEST, Marijke**
**B-9520 Sint-Lievens-Houtem (BE)**

(74) Representative: **Sundman, Patrik Christoffer et al**
**Seppo Laine Oy,**
**Itämerenkatu 3 B**
**00180 Helsinki (FI)**

(56) References cited:
EP-A1- 0 622 380    EP-A2- 0 320 150
WO-A1-01/04166      WO-A1-98/22514
WO-A1-98/30611      WO-A1-98/58976

EP 1 303 547 B1

## Description

## Background of the Invention

### Field of the Invention

The present invention relates to propylene polymers having an ultra high melt flow rate (MFR). In particular, the present invention relates to propylene polymer composition with an ultra high MFR produced in a bulk polymerisation zone of a polymerisation process comprising at least one bulk polymerisation zone and optionally at least one gas phase polymerisation zone.

### Description of Related Art

Propylene polymers with an ultra high MFR ($MFR_2 > 400$ g/10 min) are conventionally produced by controlled rheology (CR) techniques, including, e.g., visbreaking, which means that the polymer is subjected to a post-reactor treatment, wherein the polymer molecules are subjected to controlled scission in molten state. The scission may be carried out by mechanical shearing, radiation, oxidation or chemically with peroxy compounds. The visbreaking carried out by adding peroxide to the polymer granules is disclosed in, e.g., EP-A-462 574. The problem with the use of peroxide are the residues remained in the polymer. The peroxide residues result in fumes and die deposits on fibre processing equipment.

EP-B-320 150, however, discloses a process where no post-reactor is needed, but an ultra high MFR polymer is produced in a gas phase process using a high activity catalyst. The molecular weight distribution (MWD) remains essentially constant independent of the MFR, although MWD is considered to be inversely proportional to MFR. It is stated in the publication that the reaction should take place in the gas phase, since the use of liquid phase process would require excessive amounts of hydrogen due to the low solubility of hydrogen to liquid propylene. The molar ratio $H_2/C_3$ in the process of the publication is 0.05 - 0.3: 1. Furthermore, specific internal/external donor systems are used in the examples.

EP 622 380 discloses crystalline propylene homo- and copolymers having high MFR and relatively narrow MWD (molecular weight distribution) defined by PI values lower than or equal to 3.7 (preferably 2.5 to 3.3). These polymers are produced with specific catalyst systems containing diether as a specific preferred component. Further it is disclosed that extrusion is commercially not economical due to the extrusion and pelletizing difficulties. Therefore, the polymers of EP 622 380 are used in the form of non-extruded spherical particles, which are readily spun into fibres.

The production of polypropylene compositions with an ultra high MFR in a process consisting essentially of slurry reactor(s) has not been possible previously. This is due to the bubbling caused by hydrogen which tends to get out of the reaction mixture.

Research Disclosure RD 354040 (1993), disclosed anonymously, describes a catalyst system which is capable of producing ultra high MFR propylene polymers. The polymers are used for producing fibres. The catalysts used are high tacticity catalysts with a good hydrogen response. The process configuration for the process is, however, not disclosed.

None of the references discloses PP compositions with high MFR which are readily pelletized.

Ultra high MFR polymers are suitable for many applications. In particular, ultra high MFR polymers are useful for melt blowing processing purposes.

Polymers which are not pelletized have several disadvantages. It is difficult - or even impossible - to have additives and adjuvants uniformly incorporated into the polymer, which leads to non-uniform end products. Further, powdery or dusty polymer materials are difficult to handle and during transportation and storing thereof segregation occurs leading again to difficulties with regard to the uniformity of the products.

### Summary of the Invention

It is an object of the present invention to eliminate the problems of the prior art and to provide pelletized propylene polymer compositions having an ultra high melt flow rate obtained by a novel process.

In particular it is an object of the invention to provide PP composition with ultra high MFR in pelletized form, which have uniform and even additive distribution, homogeneous structure, better transport and storing resistivity, and being much less brittle than non-pelletized particles.

Further, it is another object of the present invention to provide a process for producing propylene polymer compositions having advantageous properties especially for further processing .

It is a still a further object of the present invention to provide a process for producing melt blown propylene polymer products, in particular fibres.

The invention also aims at providing polymers having good melt strength properties for improved extrudability without loss of good spinning behaviour.

These and other objects, together with the advantages thereof over known processes, which shall become apparent from the specification which follows, are accomplished by the invention as hereinafter described and claimed.

Generally, in melt blowing processing, it is important to:

- have a maximum possible throughput without the phenomenon called "shots", which can better be achieved with grades having a higher MFR, and
- be able to use as great an air volume as possible when aiming at the minimum fibre thickness without the phenomenon called "fly".

The invention is based on the surprising finding that the process used in the present invention allows for adjusting the process conditions (temperature, pressure) in a bulk reactor so that a polymer with an ultra high MFR is obtained. Further it was surprisingly found that it was possible to produce polypropylene compositions with ultra high MFR in bulk reactor by using conventional, commercially available Ziegler-Natta catalysts as well as single site catalysts. In other words, no special catalysts are needed for the operation of the present invention. The polymer compositions obtained by the present process can be pelletized as such which makes the compositions very attractive from the point of further processing.

Thus, according to the present invention, propylene homo- or copolymers having an ultra high MFR are obtainable by polymerising propylene at elevated pressure in a polymerisation process comprising at least one bulk reaction zone. According to one embodiment of the present invention the polymer composition of the present invention is produced in a multistage polymerisation process comprising at least one bulk polymerisation zone and at least one gas phase polymerisation zone. In the bulk polymerisation the reactor(s) is/are preferably loop reactor(s). The polymerisation is carried out in the presence of a catalyst and optionally together with hydrogen and/or comonomers in any or all zones. The polymerisation product with the desired ultra high MFR of at least $MFR_2$ of 400 g/10 min is recovered from the last reactor in the sequence.

More specifically, the pelletized propylene composition according to the present invention is characterised by what is stated in the characterising part of claim 1.

The process for producing pelletized polymer compositions is disclosed in claim 10.

The process for producing melt blown fibres is more specifically characterised by what is stated in the characterising part of claim 11.

A number of considerable advantages are achieved with the aid of the invention. The operation in the bulk phase allows for shorter residence times in the process. High $H_2$ concentrations are possible in bulk reactor. Further, if, in accordance with one embodiment of the present invention, supercritical conditions are used, there are no restrictions to the amount of $H_2$ feed, whereby products having a still higher MFR can be obtained. Processing window during the polymerisation process of reactor made grades is broader than that of CR grades, thus enabling the production of polymer compositions with a wide range of MWD. In addition, the use of a single site catalyst in the process results in a narrow MWD, which is desired especially for special processing, such as for producing fibres. Further, the MWD can to some extent be optimised with the aid of the temperature in the process. Actually, the MWD of the product produced in the process used in this invention has an optimised value for several applications. MWD is preferably over 4, typically in the range of 4 to 8, when Ziegler-Natta catalysts are used, a more narrow MWD is obtained, when single-site catalysts are used.

Since the use of peroxide can be avoided with the aid of the present invention, it is clear that no peroxide residues are present in the product. Thus, the amount of volatiles is on a lower level with reactor made grades compared to CR grades. In general, the rheological properties and melt strength of ultra high MFR material made in reactor are better than those of the visbreaking grades, which can be shown by better processibility and a broader processing window than with conventional CR grades in various applications such as melt processing. Surprisingly, also the polymer morphology is improved. It is generally known that the structure of ultra high MFR polymers is brittle and finely divided, while the material according to the present invention is less brittle and less finely divided.

As mentioned above, the polymer composition of the invention are provided in the form of pellets, which feature makes it very advantageous and useful. The compositions can be "pelletized as such", meaning that the polymer composition obtained from the last reactor in the polymerisation process can be pelletized without any visbreaking stages. The process according to the present invention provides a much more economical way to produce propylene polymers having ultra high MFR in pelletized form than does the gas phase process of EP-B-320 150. As regards EP 622 380 it should be pointed out that that publication does not even disclose pelletizing of polymers. Further, polymer made in a gas phase reactor only is dusty and more difficult to handle due to brittleness than are the grades made in a process comprising bulk reactors. By using a bulk reactor and optionally a gas phase reactor the obtained polymer is of more uniform quality. The polymer prepared in a bulk, preferably loop, reactor can preserve its properties even at the conditions in a gas phase reactor.

The minimum fibre thickness without deficiencies in the fibre obtained is smaller for the fibres produced according to the present invention than for the CR grades. With no peroxides present in the polymerisation product, there are no fumes or die deposits in the melt blowing process.

Next, the invention will be more closely examined with the aid of the following detailed description and with reference to the attached drawings.

## Brief Description of the Drawings

Figure 1 presents air permeability as a function of blow-off speed at spinning temperature of 250 °C.
Figure 2 presents pore size as a function of spinning temperature at normal blow-off speed.

## Detailed Description of the Invention

### Definitions

In the field of polymerisation, "bulk reactor" designates any reactor, such as a continuous or simple batch stirred tank reactor or loop reactor, operating in bulk or slurry and in which the polymer forms in particulate form. "Bulk" means a polymerisation in reaction medium that comprises at least 60 wt-% monomer. A bulk reactor is used in the process of the present invention. According to a preferred embodiment the bulk reactor comprises a loop reactor.

By "gas phase reactor" is meant any mechanically mixed or fluid bed reactor. Preferably the gas phase reactor comprises a mechanically agitated fluidised bed reactor with gas velocities of at least 0.2 m/sec.

"Reaction zone " or "polymerisation zone" stands for one or several reactors of similar type producing the same type or characteristics of polymer connected in the series.

"Ultra high MFR" is used to mean an $MFR_2$ of 400 g/10 min or more, preferably of 700 g/10 min or more (for both pelletized and non-pelletized polymer). The $MFR_2$ is determined according to standard ISO 1133 at 230 °C with a piston load of 2.16 kg.

### The polymerisation process

The present invention concerns a polymerisation process comprising at least one bulk reaction zone including at least one bulk reactor. This process allows the elevating of the pressure and the temperature of the bulk reactor high enough, resulting in the possibility to produce ultra high MFR polymers also in a bulk reactor.

According to a preferred embodiment of the invention the process additionally comprises at least one gas phase reaction zone including at least one gas phase reactor. Preferably, the at least one bulk reaction zone is arranged before the gas phase reaction zone, and all the reactors in series are arranged in a cascade. The advantage of using a reactor system comprising both bulk and gas phase reactor(s) is the easiness of operation and adjusting the MWD. The MWD of the bulk phase polymer can be adjusted by selecting different catalyst systems, and, to some extent, by the temperature.

In the following, the reaction system comprises at least one bulk reaction zone (referred to as "the first reaction zone") and at least one gas phase reaction zone (referred to as "the second reaction zone"), in that order.

However, it should be understood that the reactor system can comprise the reaction zones in any number and order. Each of the reaction zones can, and typically do, contain more than one reactor. The most typical process configuration comprises one bulk reactor, which preferably is a loop reactor, and one gas phase reactor. Still, combinations like two bulk reactors and one gas phase reactor or one bulk reactor and two or more gas phase reactors, connected in series in any order, are also possible.

In addition to the actual polymerisation reactors used for producing the propylene homo- or copolymer, the polymerisation reaction system can also include a number of additional reactors, such as pre- and/or postreactors. The prereactors include any reactor for prepolymerising the catalyst with propylene and/or other α-olefin(s) and/or ethylene, if necessary. Further, a catalyst preactivation step can be carried out before the prepolymerisation. The postreactors include reactors used for modifying and improving the properties of the polymer product. A typical example of the postreactors are additional gas phase reactors for obtaining elastic properties. All reactors of the reactor system are preferably arranged in series.

Thus, according to the invention, the process for producing the pelletized polymer composition of the invention comprises at least the steps of

- subjecting propylene, and optionally comonomer(s) and/or hydrogen to polymerisation or copolymerisation in a first reaction zone or reactor in the presence of the catalyst;
- transferring the first polymerisation product with the reaction medium into a second reaction zone or reactor, and optionally feeding comonomer(s) and/or hydrogen and/or additional propylene into the second reaction zone or reactor;
- continuing the polymerisation reaction in the second reaction zone in the presence of the first polymerisation product to produce a combined polymerisation product;
- recovering the combined polymerisation product from the second reaction zone; and
- pelletizing the obtained polymerization product.

The comonomer(s) optionally used in any or every reactor are preferably $C_2$ - $C_{10}$ olefins, e.g. ethylene, 1-butene, 4-methyl-1-pentene, 1-hexene, dienes, or cyclic olefins, or a mixture thereof.

Hydrogen can be used in different amounts as a molar mass modifier or regulator in any or every reactor. If supercritical conditions are used, there are no restrictions to the amount of hydrogen.

A prepolymerisation stage can optionally be employed before the first reaction zone in series. Typically, the catalyst, which is optionally preactivated, is then flushed to the prepolymerisation with the monomer, comonomer or diluent feed. The catalyst is subjected to prepolymerisation prior to feeding into the first actual polymerisation reactor of the reaction zone. During prepolymerisation the catalyst components are contacted with a monomer, such as an olefin monomer or a mixture of monomers. The monomer used in the prepolymerisation is typically, but not necessarily the same as in the actual polymerisation reactions. Hydrogen, on the other hand, is typically not used in the prepolymerisation step, but can very well be used, if desired. Examples of suitable systems are described in, for example, FI Patent Application No. 961152.

It is also possible to carry out the prepolymerisation in the presence of a viscous substance, such as an olefinic wax, to provide a prepolymerised catalyst which is stabile during storage and handling. The catalyst prepolymerised in wax will allow for easy dosing of the catalyst into the polymerisation reactors. Examples of suitable systems are described in, for example, FI Patent No. 95387.

From the prepolymerisation, the prepolymerised slurry is conducted to the first reaction zone. Propylene and optionally copolymers and/or hydrogen are also fed to the first reaction zone. If no prepolymerisation is included, the catalyst is fed directly to the first reaction zone.

The first reaction zone is preferably a bulk polymerisation zone. Bulk polymerisation is carried out in a reaction medium, such as propylene. The bulk polymerisation is preferably carried out in a loop reactor.

The temperature in the bulk reactor(s) is typically in the range of 40 to 110 °C, preferably in the range of 50 to 100 °C. The pressure in the bulk reaction zone has to be high enough to enable the production of ultra high MFR polymers. Typically, the reaction pressure is in the range of 40 to 100 bar, preferably 40 to 80 bar and in particular 50 - 80 bar. The MWD of the polymer of the present invention is typically narrow, if single site catalysts are used, to medium MWD (for Z-N catalysed polymers) meaning MWD typically below 8, preferably in the range of 4 to 8, measured by gel permeation chromatography (GPC). By controlling the temperature the MWD can be adjusted to some extent, i.e., by using a higher temperature a narrower MWD can be obtained. The polymerisation heat is removed by cooling the reactor with a cooling jacket.

According to one embodiment of the invention the bulk reactor(s) in the bulk reaction zone are operated at supercritical conditions. Typically this means a temperature of 92 - 100 °C and a pressure of 50 - 60 bar. This is the way to avoid any restrictions in the amount of $H_2$ feed. By using the above process conditions, propylene polymer with a high MFR and with good rheological and morphological properties is obtained.

In general, the $H_2$ content in the bulk reactor(s) is 0,5 - 20 mol-%, typically 1 - 20 mol-%, preferably 2 - 10 mol-% and in particular 2 - 5 mol%, when Ziegler-Natta catalysts are used. For single site catalysts the $H_2$ concentration needed is small, typically below 4, preferably below 1 and in particularly below 0.2 mol-%. Using a Ziegler-Natta catalyst at a pressure of at least 40 bar and at a temperature of 70 to 90 °C in the presence of 0.5 to 6 mol-% hydrogen, a composition can be produced having an $MFR_2$ of 700 g/10 min or more. Similarly, with single site catalysts at a pressure of at least 40 bar, a temperature of 50 to 80 °C and in the presence of 0.01 to 4 mol-% hydrogen, polymer compositions having an $MFR_2$ of 800 g/10 min or more can be obtained.

When operating at supercritical conditions the amount of $H_2$ in the bulk reactor can be high, and, thus, near to the upper limits of the ranges above, i.e., optionally even up to 20 mol-%.

In the bulk polymerisation zone more than one reactor can be used in series. In such a case the polymer suspension is fed without separation of inert components and monomers intermittently or continuously to the following bulk reactor. Due to a short residence time in loop reactor, faster changes in grades are possible.

The residence time in the bulk polymerisation zone depends on the catalyst activity and on the desired composition of the end products. Generally, the residence time in a bulk reactor must be at least 10 minutes, preferably 20 - 100 min for obtaining a sufficient degree of polymerisation. A typical residence time is between 40 and 70 min.

The content of the (last) bulk reactor, the polymerisation product and reaction medium together with unreacted monomer and the catalyst, can be conducted directly to the second reaction zone, typically to a fluidised bed gas phase reactor. Alternatively, some components, e.g. hydrogen, can be fully or partially removed with various technical solutions before the flow enters the second reaction zone.

The second reaction zone is preferably a gas phase reaction zone including at least one gas phase reactor, wherein propylene and optionally comonomer(s) are polymerised in a reaction medium comprising gas or vapour.

The gas phase reactor can be an ordinary fluidised bed reactor, although other types of gas phase reactors can be used. In a fluidised bed reactor, the bed consists of the formed and growing polymer particles as well as still active catalyst coming along with the polymer fraction from the bulk reactor. The bed is kept in a fluidised state by introducing gaseous components, e.g. monomer, at such a flow rate (at least 0.2 m/s) which make the particles act as a fluid. The fluidising gas can contain also inert carrier gases, like nitrogen and also hydrogen as a molecular weight modifier.

The gas phase reactor used can be operated in the temperature range of 50 to 115 °C, preferably between 60 and 110 °C and under a reaction pressure between 10 and 40 bar.

Fresh propylene is preferably, but not necessarily, fed to the gas phase polymerisation zone. Optionally, also comonomer(s) and/or hydrogen are fed to the gas phase polymerisation zone. In the reactor, hydrogen is typically present at 1 - 500 mol/kmol propylene, preferably 10 - 200 mol/kmol propylene and in particular 10 - 150 mol/kmol propylene.

The residence time in the gas phase polymerisation zone depends on the activity of the catalyst and on the desired composition of the end product. A typical residence time in a gas phase reactor is more than 1 h, according to the present invention typically 1 - 2.5 h, preferably 1.2 - 1.8 h.

The pressure of the second polymerisation product including the gaseous reaction medium is then reduced after the first gas phase reactor in order to separate part of the gaseous and possible volatile components (e.g. heavy comonomers and compounds used for catalyst feeds) of the product e.g. in a flash tank. The overhead stream or part of can be circulated to the first gas phase reactor or to the bulk polymerisation zone.

If desired, the polymerisation product can be fed into additional gas phase reactor(s) to produce a modified polymerisation product from which the polypropylene is separated and recovered.

According to one embodiment of the present invention, both bulk and gas phase reaction zones are employed. By controlling the production splits between the bulk reaction zone and gas phase reaction zone, the properties of the polymer can be adjusted. Further, by using the direct feed from the bulk reaction zone or reactor, especially from the loop reactor(s), to the gas phase reaction zone, the reaction medium of the bulk phase will not be flashed out, and it can thus be used in the gas phase reaction zone or reactor providing for, e.g., savings in material consumption with regard to the monomers and/or hydrogen present in the reaction medium.

According to the invention, the polymerisation product obtained from the last reactor in the sequence is pelletized. Optionally, desired additives or adjuvants are incorporated to the polymerisation product during pelletizing, in order to get a pelletized product which is easy to handle and for the processing into the desired end products.

Bulk density of polymer pellets is higher than that of the non-pelletised polymer powder. Bulk density of the non-pelletised polymer powder is typically in the range of 300 - 400 kg/m$^3$ and bulk density of pellets is typically 550 - 750 preferably 600 - 700 kg/m$^3$. The pellets have uniform size without tails, agglomerates and dust. They have cylindrical form, typically with a diameter of about 3 mm and length of 3,5 mm. The pellets flow easily in transport lines, packaging machines, feeding and weighing equipment.

For producing the present pellets, the polymer powder mixed with additives is fed normally in nitrogen atmosphere into the extruder. The extruder may have one or two rotating screws. In case of twin-screw extruder the screws may be co- or counter rotating. The extruder may be equipped with a throttle valve and gear pump in order to control the homogenisation and polymer flow inside the extruder. The extruder may be additionally be equipped with a screen. The extruder is heated in order to facilitate the melting of the polymer. The extruder screw is for conveying, melting, mixing and homogenizing the polymer and additives.

The polymer melt leaves the extruder through the die plate and is cooled down into pellets in an underwater pelletizer where the cutting is done typically with rotating knives under water. The die plate has holes, through which the knifes are installed onto the plate. Alternatively, cooling is carried out on a cooling belt whereafter the material is cut into pellets not using underwater cutting. The underwater pelletizer is preferred. The pellet water is circulated and cooled to desired temperature. The pellet water is separated from pellets and dry pellets are transported further.

**The catalyst**

The catalyst used in the present invention can be any single site or Ziegler-Natta type catalyst which is active in propylene polymerisation at the reaction conditions.

By using single site catalysts in the present process products having a relatively narrow molecular weight distribution are obtained. Single site catalysts have generally good hydrogen response, which means that the amount of hydrogen in the bulk reactor can be kept low, typically below 1 mol-% and preferably 0.2 mol-% or less.

The single site catalysts can be used as unsupported, but typically they are supported on a solid carrier. The carrier is typically inorganic, and suitable materials comprise, e.g., silica (preferred), silica-alumina, alumina, magnesium oxide, titanium oxide, zirconium oxide and magnesium silicate.

The single site catalysts are normally, but not necessarily, used together with a cocatalyst, e.g., an aluminiumoxane cocatalyst.

The Ziegler-Natta type catalyst typically used in the present invention is a propylene stereospecific, supported high yield Ziegler-Natta catalyst. Generally, the Ziegler-Natta catalyst system used in the present invention comprises a catalyst component, a cocatalyst component and an external electron donor. In particular the Ziegler-Natta catalyst comprises Ti, Mg and Cl as essential components.

Suitable catalyst systems are described in, for example, in Finnish Patents Nos. 86866, 96615, 88047 and 88048, and Patent Applications FI 961457, FI 963707, FI 974621, FI 974622 and FI 974623.

The catalyst component contains primarily a procatalyst component containing typically magnesium, titanium, halogen, and an internal electron donor.

The external donor is used to enhance the stereoselectivity of the process. Preferably a silane based donor, such as cyclohexyl-methyldimethoxysilane, is used.

The cocatalyst component is preferably selected from the group of organometallic compounds. Typically, the cocatalysts are metal hydrides, or alkyls or aryls of metals. The metal is typically aluminium, lithium, zinc, tin cadmium, beryllium or magnesium. Especially preferred cocatalyst is organoaluminium compound, in particular trialkyl aluminium, dialkyl aluminium chloride or alkyl aluminium sesquichloride. According to a preferred embodiment, the cocatalyst is triethyl aluminium (TEA).

Optionally, the Ziegler-Natta type catalyst can be preactivated with a low amount of cocatalyst before use in polymerisation. In catalyst preactivation dry catalyst is at first fed into oil at a temperature near room temperature, then the mixture is cooled down (to 10 - 15 °C), and the cocatalyst is mixed in, and the stirring is continued for 0.5 - 3 hours. Then, the temperature is increased with 10 - 40 °C to keep the viscosity moderate. Before use in polymerisation, the mixture is, again, cooled down to room temperature

**The polymer composition**

The $MFR_2$ value of the polymer composition obtained by the present process is typically 400 g/10 min or more, typically up to 5000 g/10 min, preferably 700 g/10 min or more and in particular 700 - 1500 g/10 min. The MWD is independent of the MFR value and an optimised MWD for the product is obtained. The polymer composition obtained is pelletized, i.e., it is pelletized as such. The polymer product does not contain any peroxy residues from peroxides used in visbreaking, because no visbreaking is needed.

The xylene solubles fraction (XS) of the polymer material is typically 0.1 to 10 wt-%, preferably 1 - 8 wt-%, and in particular 1 - 6 wt-%.

The polymer product obtained has excellent melt strength properties, as well as good morphological and rheological properties. Further, the product is not so dusty as the conventionally produced grades. The fraction of the finely divided material in the polymerisation product obtained from the last reactor in the reactor sequence is very small. Typically, there are 5 wt-% or less, preferably less than 3 wt-%, particles with a size of 100 μm or less in the polymerisation product produced by using a Ziegler-Natta catalyst system in the present polymerisation process.

The polymer composition can also be blended with other polymers, typically with polyethylene or other α-olefins, preferably those having 3 - 6 carbon atoms. By blending the ultra high molecular weight polypropylene it is possible to obtain a more economical product with equal or with regard to some properties or conditions even better performance.

**The melt blowing process**

The pelletized polymer composition can be processed with various methods, e.g., extrusion, injection moulding, blow moulding or melt blowing.

The polymer product obtained from the polymerisation process is particularly suitable for melt blowing processing products. The polymer from the reactor is pelletized and then fed into melt blowing processing equipment for spinning fibres. The improved melt strength of the material enables the production of very thin fibres. A typical product of a melt blowing process is, e.g., a fibrous non-woven fabric (or fabric laminates), which can be used for industrial or medical garments, wipers, towels, filters and the like.

One of the important properties for a filter made of polymer fibres is the pore size. Pore size of a filter should be small and the pores ought to be evenly distributed. The pore size is dependent on the fibre thickness (and its even distribution) and has an influence on the permeability of solid particles and air. In general, a higher blow-off speed results in thinner fibres and smaller pores. Filters produced from the material according to the present invention require higher blow-off speeds to provide equal alternatives to the commercial grades. However, the advantages gained during the polymerisation process, the good morphology of the fibres and the absence of die deposits and fumes compensate for the slightly higher energy costs at the melt blowing stage.

## Description of Analytical Methods

MFR: The melt flow rate of the polymer material was determined from the pelletized polymer composition according to ISO standard 1133 using a piston load of 2.16 kg and a temperature of 230 °C. The abbreviation "MFR" is generally provided with a numerical subindex indicating the load of the piston in the test. Thus, e.g., $MFR_2$ designates a 2.16 kg load. Measuring MFR from pelletized or non-pelletized polymer, gives values which differ from each other a few percents being, however, on the same level.

Xylene Solubles (XS): Determination of xylene soluble fraction (XS): 2.0 g of polymer is dissolved in 250 ml p-xylene at 135 °C under agitation. After 30 ± 2 minutes the solution is allowed to cool for 15 minutes at ambient temperature and then allowed to settle for 30 minutes at 25 ± 0.5 °C. The solution is filtered with filter paper into two 100 ml flasks.

The solution from the first 100 ml vessel is evaporated in nitrogen flow and the residue is dried under vacuum at 90 °C until constant weight is reached.

The xylene soluble fraction is calculated using the following equation:

$$XS \% = (100 \times m_1 \times v_0) / (m_0 \times v_1),$$

wherein

$m_0$ = initial polymer amount (g)
$m_1$ = weight of residue (g)
$v_0$ = initial volume (ml)
$v_1$ = volume of analysed sample (ml).

Molecular weight distribution, MWD ($M_w/M_n$) was measured with gel permeation chromatography (GPC).

## Example 1

The objective for the product was to produce ultra high melt flow rate homopolymer for melt blown fibre applications. The product was produced in the bulk- gas phase reactor (GPR) combination.

*Catalyst*

A highly active propylene polymerisation catalyst of ZN type (type A), prepared according to Finnish Patent No. 88047, was used.

Said mixture of the catalyst and viscous medium was fed with non-valve piston pump according to Finnish patent No. 94164. The cocatalyst was triethylaluminium (TEA) and the external donor comprised cyclohexyl-methyldimethoxysilane (donor C). TEA/Titanium molar ratio was about 250 mol/ mol and TEA/donor molar ratio was 40...50. The activation time was 15-30 seconds.

*Prepolymerisation*

The catalyst was flushed with propylene to the continuous prepolymerisation reactor where also TEA and donor were fed. The prepolymerisation reactor was operated at the temperature of 30 °C and under the pressure of 55 bar.

The residence time of the particles was 8-10 minutes. The prepolymerised catalyst component was used in a loop reactor and a gas phase reactors connected in series.

*Polymerisation*

The operating temperature in the loop reactor was 80 °C, the pressure was 55 bar, and the residence time was 0.7 h. The loop reactor was operated below bubble point and the hydrogen concentration in loop reactor was 4.5 mol-%.

The polymer stream from loop reactor was transferred to the gas phase reactor by using a direct feed line. The gas phase reactor was operated at 85 °C and having total pressure of 29 bar. The production split between loop and gas phase reactor was about 65/35 and the residence time in GPR was 1.3 h. The $H_2/C_3$ molar ratio in GPR was 0.15 mol/mol.

The $MFR_2$ was set to be about 750...1100 g/10 min in both reactors by adjusting the hydrogen feed accordingly. The xylene solubles were controlled to be 4 - 6 wt-% by adjusting the donor feed accordingly.

Morphology of the polymer was very good in spite of ultra high MFR. There was only 2 wt-% material below 0.100 mm, i.e., the fraction of finely divided product was very small. The product was not brittle in nature.

*Results*

Polymerisation conditions and product characteristics are shown in Table 1. The obtained polymer composition was pelletized by using a Berstorff 50 mm twin screw extruder at a temperature over 180 °C (e.g. 180 - 190 °C). The additives comprised 1500 ppm Irganox B215 and 400 ppm calcium stearate.

**Example 2**

The polymerisation was carried out as in Example 1. Polymerisation conditions and the most important product analysis are shown in Table 1.

Pelletizing was carried out as in Example 1.

**Example 3a**

Polymerisation and pelletizing were carried out as in Example 1, except that another type of Z-N type of catalyst (type B) prepared according to Finnish patent No. 963707 was used.

The residence time in loop reactor was slightly longer than in Example 1. In GPR was slightly lower temperature and the production split was 83/17. Polymerisation conditions and the most important product analysis are shown in Table 1.

**Example 3b**

Polymerization was carried out as in Example 3a with a type B Z-N catalyst. However, another batch of catalyst was used. The obtained pelletized polymer composition had similar test data as the product of Example 3a as indicated in Table 1.

**Example 4**

An impregnated PP Single Site catalyst prepared according to PCT/GB98/03355 was used in this test run. Due to totally different use of catalyst no kind of catalyst preactivation or cocatalyst or donor feed was used.

The catalyst wax mixture was fed with non-valve piston pump and flushed to prepolymerisation reactor with pentane feed. No hydrogen was fed into the prepolymerisation step.

The loop reactor was operated at the temperature of 70 °C and in 40 bar pressure. Due to the very good hydrogen response of single site catalyst $MFR_2$ of 1100 g/10 min was easily reached by using 0.13 mol-% hydrogen in loop reactor.

Polymerisation conditions and the most important product analysis are shown in Table 1.

Pelletizing was carried out as in Example 1.

Table 1.

| Process data and the most important product analysis | | | | | |
|---|---|---|---|---|---|
| **Table 1** | | **Example 1** | **Example 2** | **Example 3a** | **Example 4** |
| *Catalyst* | | ZN-TYPE (A) | ZN-TYPE (A) | ZN-TYPE (B) | Single Site |
| Cat feed | g/h | 1.2 | 1 | 0.75 | 1.8 |
| TEA/Ti | mol/mol | 250 | 250 | 260 | - |

Table 1. (continued)

| Process data and the most important product analysis | | | | | |
| --- | --- | --- | --- | --- | --- |
| **Table 1** | | **Example 1** | **Example 2** | **Example 3a** | **Example 4** |
| ***Catalyst*** | | ZN-TYPE (A) | ZN-TYPE (A) | ZN-TYPE (B) | Single Site |
| TEA/C-donor | mol/mol | 50 | 40 | 28 | - |
| Donor/Ti | mol/mol | 5.0 | 6.3 | 9.3 | - |
| ***Prepol.*** | | | | | |
| Temperature | °C | 30 | 30 | 20 | 23 |
| pressure | bar | 55 | 55 | 54 | 40 |
| Stability | | GOOD | GOOD | GOOD | GOOD |
| ***Loop reactor*** | | | | | |
| Temperature | °C | 80 | 80 | 80 | 70 |
| pressure | bar | 55 | 55 | 54 | 40 |
| $H_2$ concentration | mol-% | 4.5 | 4.5 | 2.1 | 0.13 |
| Residence time | h | 0.7 | 0.7 | 1.1 | 2.0 |
| Stability | | GOOD | GOOD | GOOD | GOOD |
| Production split | wt-% | 65 | 64 | 83 | 100 |
| $MFR_2$ | g/10 min | 879 | 910 | 1008 | 1100 |
| XS | wt-% | 5.0 | 5.2 | 4.5 | 2.0 |
| ***Gas phase reactor*** | | | | | |
| Temperature | °C | 85 | 85 | 80 | - |
| Total pressure | bar | 29 | 29 | 29 | - |
| H2/C3 | mol/kmol | 0.147 | 0.151 | 0.13 | - |
| Residence time | h | 1.3 | 1.3 | 1.4 | - |
| Stability | | GOOD | GOOD | GOOD | - |
| Production split | % | 35 | 36 | 17 | - |
| Total productivity | kgPP/g cat | 26 | 28 | 32 | - |
| $MFR_2$/pellet | g/10 min | 820 | 810 | 1040 | - |
| XS/pellet | wt-% | 5.2 | 5.8 | 4.6 | - |
| MWD | | | | 6.4 | |
| $M_n$ | | | | 11400 | |
| $M_w$ | | | | 72600 | |

For Example 3b, all data are the same as for Example 3a, with the exception that $M_n$ was 11700, $M_w$ 74700 and $MRF_2$/pellet 980 g/10 min.

**Application tests**

The pelletized materials from Examples 1 and 2 were tested in pilot scale melt blowing line for melt blown fibre applications and compared with CR (Controlled rheology, visbroken) grades HM520J and HN520J ($MFR_2$ of 800 g/10 min and 1200 g/10 min, respectively), which are commercially available grades of Borealis.

**Testing / Results**

Two different spinning temperatures 250 °C and 270°C and three different blow-off speed (air volume) : minimum - normal - maximum were tested in a pilot scale melt blowing line.

*1. Influence of material and blow-off speed on air permeability*

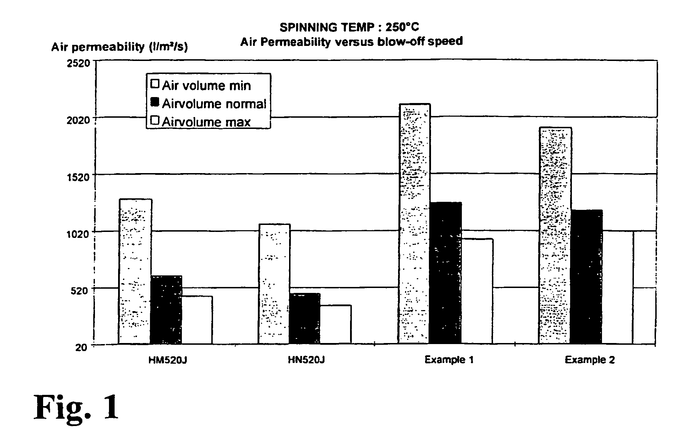

It is presented in Figure 1 how the air permeability is higher for the reactor made materials (example I and 2) and is decreasing with increasing air speed.

*2. Influence of spinning temperature on pore size and airpermeability:*

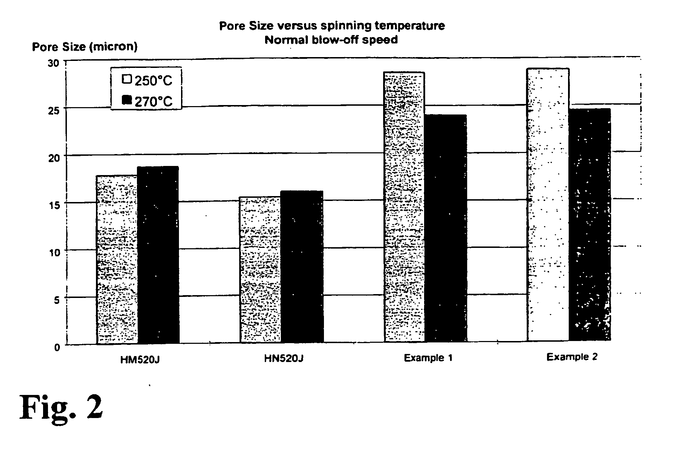

Figure 2 illustrates the effect of spinning temperature on the pore size. For the materials prepared according to Examples 1 and 2, pore size decreases as the spinning temperature increases. This is most probably due to finer fibre formation at the higher temperature.

**Claims**

1. A process for producing pelletized polymer compositions, said process comprising polymerizing propylene at elevated pressure, optionally together with hydrogen and/or comonomers, in the presence of a catalyst in a reaction sequence including at least one bulk reaction zone operated at a pressure of 40 to 100 bar at a temperature of 40 to 110°C, and optionally at least one gas phase reaction zone, to produce a composition having an $MFR_2$ of 400 g/10 min or more, a medium molecular weight distribution of 4 to 8 if a Ziegler-Natta catalyst is used, and a narrow MWD, if a single site catalyst is used, and pelletizing the obtained polymer.

2. The process according to claim 1, wherein the $MFR_2$ of the propylene polymer is 700 g/10 min or more, preferably 700 - 1500 g/10 min.

3. The process according to claim 1 or 2, wherein propylene is polymerized, optionally together with hydrogen and/ or comonomers, in a bulk reaction zone at a pressure in the range of 40 to 80 bar and in particular 50 - 80 bar.

4. The process according to any of the preceding claims, wherein propylene is polymerised, optionally together with hydrogen and/or comonomers, in a bulk reaction zone at a temperature in the range of 50 to 100 °C.

5. The process according to any of the preceding claims, wherein the composition is essentially free from volatiles.

6. The process according to any of claims 1 to 5, wherein polymerisation in the bulk reaction zone is carried out at supercritical conditions.

7. The process according to any of claim 1 to 6, wherein a pelletized propylene homo- or copolymer composition is produced by polymerising propylene at elevated pressure, optionally together with comonomers, in the presence of a high-yield Ziegler-Natta catalyst containing Ti, Mg and Cl as essential components, in a reaction sequence including at least one bulk reaction zone and at least one gas phase reaction zone, said polymerisation in said bulk reaction zone being carried out at a pressure of at least 40 bar and at a temperature of 70 to 90 °C in the presence of 2 to 10 mol-% hydrogen, said composition having an $MFR_2$ of 700 g/10 min or more.

8. The process according to claim 1, wherein a pelletized propylene homo- or copolymer composition is obtained by polymerising propylene at elevated pressure, optionally together with comonomers, in the presence of a single site catalyst in a reaction sequence including at least one bulk reaction zone, said polymerisation being carried out at a pressure of at least 40 bar and at a temperature of 50 to 80 °C in the presence of 0.01 to 1 mol-% hydrogen, said composition having au $MFR_2$ of 800 g/10 min or more.

9. The process according to claim 1, wherein the polymer composition comprising an ultra high MFR propylene homo- or copolymer is blended with a polymer selected from the group comprising ethylene and other $\alpha$-olefins with 3 - 6 carbon atoms.

10. The process according to any of claims 1 to 9 for producing pelletized polymer compositions suitable for melt blowing.

11. A process for producing propylene homo- or copolymer fibres, said process comprising

— producing a propylene homo- or copolymer composition with an ultra high MFR by polymerizing propylene at elevated pressure, optionally together with hydrogen and/or comonomers, in the presence of a catalyst in a reaction sequence including at least one bulk reaction zone operated at a pressure of 40 to 100 bar at a temperature of 40 to 100 °C, and optionally at least one gas phase reaction zone, to produce a composition having an $MFR_2$ of 400 g/10 min or more, a medium molecular weight distribution of 4 to 8 if a Ziegler-Natta catalyst is used, and a narrow MWD, if a single site catalyst is used,

— pelletizing the obtained polymer; and

— melt blowing said composition to fibres.

12. The process according to claim 11, wherein the process is used for producing non-woven fabrics.

13. The process according to claim 11 or 12, wherein the process is used for producing filters.

**Patentansprüche**

1. Verfahren zur Herstellung pelletierter Polymerzusammensetzungen, wobei das genannte Verfahren die Polymerisierung von Propylen bei erhöhtem Druck, optional zusammen mit Wasserstoff und / oder Comonomeren, in Gegenwart eines Katalysators in einer Reaktionsabfolge, die eine bei einem Druck von 40 bis 100 bar, bei einer Temperatur von 40 bis 110°C betriebene Bulk-Reaktionszone und optional wenigstens eine Gasphasen-Reaktionszone beinhaltet, um eine Zusammensetzung mit einer $MFR_2$ von 400 g/10 min oder mehr, einer mittleren Motekulargewichtsverteilung von 4 bis 8, falls ein Ziegler-Natta-Katalystor verwendet wird und einer engen MWD, falls ein Einzentren-Katalysator verwendet wird, zu erhalten und die Pelletierung des erhaltenen Polymers umfasst.

2. Verfahren gemäß Anspruch 1, worin die $MFR_2$ des Propylenpolymers 700 g/10 min oder mehr, bevorzugt 700 - 1500 g/10 min, beträgt.

3. Verfahren gemäß Anspruch 1 oder 2, worin Propylen, optional zusammen mit Wasserstoff und / oder Comonomeren, in einer Bulk-Reaktionszone bei einem Druck im Bereich von 40 bis 80 bar und insbesondere 50 - 80 bar polymerisiert wird.

4. Verfahren gemäß einem der vorhergehenden Ansprüche, worin Propylen, optional zusammen mit Wasserstoff und / oder Comonomeren, in einer Bulk-Reaktionszone bei einer Temperatur im Bereich von 50 bis 100°C polymerisiert wird.

5. Verfahren gemäß einem der vorhergehenden Ansprüche, worin die Zusammensetzung im Wesentlichen frei von flüchtigen Stoffen ist.

6. Verfahren gemäß einem der Ansprüche 1 bis 5, worin die Polymerisation in der Bulk-Reaktionszone unter überkritischen Bedingungen durchgeführt wird.

7. Verfahren gemäß einem der Ansprüche 1 bis 6, worin eine pelletierte Propylen-Homo- oder -Copolymerzusammensetzung durch Polymerisierung von Propylen bei erhöhtem Druck, optional zusammen mit Comonomeren, in Gegenwart eines Ziegler-Natta-Katalysators mit hoher Ausbeute, der Ti, Mg und Cl als wesentliche Bestandteile enthält, in einer Reaktionsabfolge hergestellt wird, die wenigstens eine Bulk-Reaktionszone und wenigstens eine Gasphasen-Reaktionszone beinhaltet, wobei die genannte Polymerisation in der genannten Bulk-Reaktionszone bei einem Druck von wenigstens 40 bar und einer Temperatur von 70 bis 90°C in Gegenwart von 2 bis 10 mol-% Wasserstoff durchgeführt wird, wobei die genannte Zusammensetzung eine $MFR_2$ von 700 g/10 min oder mehr aufweist.

8. Verfahren gemäß Anspruch 1, worin eine pelletierte Propylen-Homo- oder -Copolymerzusammensetzung durch Polymerisierung von Propylen bei erhöhtem Druck, optional zusammen mit Comonomeren, in Gegenwart eines Einzentren-Katalysators in einer Reaktionsabfolge hergestellt wird, die wenigstens eine Bulk-Reaktionszone beinhaltet, wobei die genannte Polymerisation bei einem Druck von wenigstens 40 bar und einer Temperatur von 50 bis 80°C in Gegenwart von 0,01 bis 1 mol-% Wasserstoff durchgeführt wird, wobei die genannte Zusammensetzung eine $MFR_2$ von 800 g/10 min oder mehr aufweist.

9. Verfahren gemäß Anspruch 1, worin die Polymerzusammensetzung, die ein Propylen-Homo- oder -Copolymer mit ultrahoher MFR aufweist, mit einem Polymer gemischt wird, das aus der Ethylen und andere $\alpha$-Olefine mit 3 - 6 Kohlenstoffatomen umfassenden Gruppe ausgewählt ist.

10. Verfahren gemäß einem der Ansprüche 1 bis 9 zur Herstellung pelletierter Polymerzusammensetzungen, die zum Schmelzblasen geeignet sind.

11. Verfahren zur Herstellung Propylen-Homo- oder -Copolymerfasern, wobei das Verfahren umfasst:

- Herstellung einer Propylen-Homo- oder - Copolymerzusammensetzung mit einer ultrahohen MFR durch Polymerisierung von Propylen bei erhöhtem Druck, optional zusammen mit Wasserstoff und / oder Comonomeren, in Gegenwart eines Katalysators in einer Reaktionsabfolge, die eine bei einem Druck von 40 bis 100 bar, bei einer Temperatur von 40 bis 110°C betriebene Bulk-Reaktionszone und optional wenigstens eine Gasphasen-Reaktionszone beinhaltet, um eine Zusammensetzung mit einem $MFR_2$ von 400 g/10 min oder mehr, einer mittleren Molekulargewichtsverteilung von 4 bis 8, falls ein Ziegler-Natta-Katalystor verwendet wird und einer engen MWD, falls ein Einzentren-Katalysator verwendet wird, zu erhalten,
- Pelletierung des erhaltenen Polymers; und
- Schmelzblasen der genannten Zusammensetzung zu Fasern.

12. Verfahren gemäß Anspruch 11, wobei das Verfahren zur Herstellung nicht gewebter Stoffe verwendet wird.

13. Verfahren gemäß Anspruch 11 oder 12, wobei das Verfahren zur Herstellung von Filtern verwendet wird.

**Revendications**

1. Procédé de production de compositions de polymère pastillées, ledit procédé comprenant la polymérisation du propylène à pression élevée, facultativement conjointement avec de l'hydrogène et/ou des comonomères, en présence d'un catalyseur dans une séquence de réaction comprenant au moins une zone de réaction en volume mis en oeuvre à une pression de 40 à 100 bars à une température de 40 à 110 °C, et facultativement au moins une zone de réaction en phase gazeuse pour produire une composition ayant une ultra haute vitesse de flux fondu ($MFR_2$) de 400 g/10 min ou plus, une distribution de masse moléculaire moyenne de 4 à 8 si un catalyseur de Ziegler-Natta est utilisé, et une distribution de masse moléculaire étroite si un catalyseur à un seul site est utilisé, et le pastillage du polymère obtenu.

2. Procédé selon la revendication 1, dans lequel le $MFR_2$ du polymère de propylène est de 700 g/10 min ou plus, de préférence de 700 à 1 500 g/10 min.

3. Procédé selon la revendication 1 ou 2, dans lequel du propylène est polymérisé, facultativement conjointement avec de l'hydrogène et/ou des comonomères, dans une zone de réaction en volume à une pression dans la gamme de 40 à 80 bars et en particulier de 50 à 80 bars.

4. Procédé selon l'une quelconque des revendications précédentes, dans lequel du propylène est polymérisé, facultativement conjointement avec de l'hydrogène et/ou des comonomères, dans une zone de réaction en volume à une température dans la gamme de 50 à 100 °C.

5. Procédé selon l'une quelconque des revendications précédentes, dans lequel la composition est essentiellement dépourvue de volatils.

6. Procédé selon l'une quelconque des revendications 1 à 5, dans lequel la polymérisation dans la zone de réaction en volume est réalisée dans des conditions supercritiques.

7. Procédé selon l'une quelconque des revendications 1 à 6, dans lequel une composition d'homo- ou co-polymère de propylène pastillée est produite en polymérisation du propylène à pression élevée, facultativement conjointement avec des comonomères, en présence d'un catalyseur de Ziegler-Natta à rendement élevé contenant du Ti, du Mg et du Cl comme composants essentiels dans une séquence de réaction comprenant au moins une zone de réaction en volume et au moins une zone de réaction en phase gazeuse, ladite polymérisation dans ladite zone de réaction en volume étant réalisée à une pression d'au moins 40 bars et à une température de 70 à 90 °C en présence de 2 à 10 % en mol d'hydrogène, ladite composition ayant un $MFR_2$ de 700 g/10 min ou plus.

8. Procédé selon la revendication 1, dans lequel une composition d'homo- ou co-polymère de propylène pastillée est obtenue en polymérisant du propylène à pression élevée, facultativement conjointement avec des comonomères, en présence d'un catalyseur à un seul site dans une séquence de réaction comprenant au moins une zone de réaction en volume, ladite polymérisation étant réalisée à une pression d'au moins 40 bars et à une température de 50 à 80 °C en présence de 0,01 à 1 % en mol d'hydrogène, ladite composition ayant un $MFR_2$ de 800 g/10 min ou plus.

9. Procédé selon la revendication 1, dans lequel la composition de polymère comprenant un homo- ou co-polymère de propylène à MFR ultra élevé est mélangée avec un polymère choisi dans le groupe comprenant l'éthylène et d'autres $\alpha$-oléfines ayant de 3 à 6 atomes de carbone.

10. Procédé selon l'une quelconque des revendications 1 à 9, destiné à produire des compositions de polymère pastillées appropriées pour un soufflage en fusion.

11. Procédé de production de fibres d'homo- ou de co-polymère de propylène, ledit procédé comprenant :

   - la production d'une composition d'homo- ou co-polymère de propylène ayant un MFR ultra élevé par polymérisation de propylène à pression élevée, facultativement conjointement avec de l'hydrogène et/ou des comonomères, en présence d'un catalyseur dans une séquence de réaction comprenant au moins une zone de réaction en volume mise en oeuvre à une pression de 40 à 100 bars à une température de 40 à 110 °C, et facultativement au moins une zone de réaction en phase gazeuse pour produire une composition ayant un $MFR_2$ de 400 g/10 min ou plus, une distribution de masse moléculaire moyenne de 4 à 8 si un catalyseur de Ziegler-Natta est utilisé, et une distribution de masse moléculaire étroite si un catalyseur à un seul site est utilisé,
   - le pastillage du polymère obtenu ; et
   - le soufflage en fusion de ladite composition en fibres.

12. Procédé selon la revendication 11, dans lequel le procédé est utilisé pour produire des étoffes non tissées.

13. Procédé selon la revendication 11 ou 12, dans lequel le procédé est utilisé pour produire des filtres.

**SPINNING TEMP : 250°C**
**Air Permeability versus blow-off speed**

Air permeability (l/m²/s)

☐ Air volume min
■ Airvolume normal
☐ Airvolume max

HM520J     HN520J     Example 1     Example 2

# Fig. 1

Fig. 2